# EUROPEAN PATENT SPECIFICATION

(11) **EP 3 185 206 B1**
(45) Date of publication and mention of the grant of the patent: **26.09.2018**
(21) Application number: 15307100.6
(22) Date of filing: 22.12.2015
(51) Int. Cl.: G06T 5/00, G06T 7/00, G06T 5/20, G06T 5/30

(54) **METHODS AND SYSTEMS FOR IMAGE PROCESSING OF DIGITAL IMAGES**
VERFAHREN UND SYSTEME ZUR BILDVERARBEITUNG DIGITALER BILDER
PROCÉDÉS ET SYSTÈMES POUR LE TRAITEMENT D'IMAGES NUMÉRIQUES

(43) Date of publication of application: 28.06.2017
(73) Proprietor: Thomson Licensing, 92130 Issy-les-Moulineaux (FR)
(72) Inventor: POULI, Tania, 35576 Cesson-Sévigné (FR); ABEBE, Mekides, 35576 Cesson-Sévigné (FR); KERVEC, Jonathan, 35576 Cesson-Sévigné (FR)
(74) Representative: Huchet, Anne

(56) References cited:
- WO-A1-02/101660
- WO-A1-2012/169149
- WO-A1-2015/189343
- MEKIDES ASSEFA ET AL: "Correction of over-exposure using color channel correlations", 2014 IEEE GLOBAL CONFERENCE ON SIGNAL AND INFORMATION PROCESSING (GLOBALSIP), 1 December 2014 (2014-12-01), pages 1078-1082, XP055284583, DOI: 10.1109/GlobalSIP.2014.7032287 ISBN: 978-1-4799-7088-9

## Description

### TECHNICAL FIELD

The present disclosure generally relates to methods and systems for image processing and, more particularly, to methods and systems that apply image processing to local regions of an image.

### BACKGROUND

Some types of image processing are applied locally, e.g., applied to separate regions of an image. For example, a declipping process may be applied only to clipped pixels in an image, e.g., overexposed pixels. Local image processing techniques typically determine regions of the image to be processed, and then image processing is performed on each region separately. For example, a declipping process may first determine which regions of an image include overexposed pixels, and then may apply a declipping process to each overexposed region. Processing separate regions of an image can provide advantages, e.g., efficiency by avoiding unnecessary processing, localized effects, etc.

### SUMMARY

However, in many cases it may be helpful for regions of an image to be grouped together, and for the image processing to take into account the different groups. Described herein are various systems and methods for grouping image regions using distances between morphological skeletons of the image regions, and performing image processing based on the groups.

In WO 2015/189343 a method for image colorization is disclosed. Multiple image regions are determined by image segmentation, a morphological skeleton is determined for each region and then used as a starting point for color diffusion. Said diffusion is based on distance from the corresponding skeleton.

In various embodiments, an image can be obtained, and multiple image regions of the image can be determined. For example, the image regions can be determined by identifying overexposed regions of the image. A morphological skeleton can be determined for each of the image regions. Distances between image regions can be determined based on the morphological skeletons. For example, a shortest distance between image regions can be determined based on distances between endpoints of the morphological skeletons of the regions. Multiple groups of two or more of the image regions can be determined based on the distances. For example, image regions that are closer together than a certain distance value can be grouped together. The image can then be processed based on the groups. For example, declipping can be performed based on the different groups of image regions, which can be overexposed regions of the image.

### BRIEF DESCRIPTION OF THE DRAWINGS

FIG. 1 is a block diagram of an image collection device according to various embodiments.
FIG. 2 is a flowchart of an example of a method according to various embodiments.
FIG. 3 is an illustration of an input image to be declipped according to various embodiments.
FIG. 4 illustrates an image that includes clipped regions according to various embodiments.
FIG. 5 illustrates clipped regions including morphological skeletons according to various embodiments.
FIG. 6 illustrates other clipped regions including morphological skeletons according to various embodiments.
FIG. 7 illustrates endpoints of the morphological skeletons shown in FIG. 5.
FIG. 8 illustrates endpoints of the morphological skeletons shown in FIG. 6.
FIG. 9 is a flowchart of an example of another method according to various embodiments.
FIG. 10 illustrates an example morphological skeleton including node points according to various embodiments.
FIG. 11 illustrates another example of an apparatus according to various embodiments.

It should be understood that the drawings are for purposes of illustrating the concepts of the disclosure and are not necessarily the only possible configurations for illustrating the disclosure.

### DETAILED DESCRIPTION

Some types of image processing are global, i.e., applied equally to all pixels in an image. For example, a global blur filter can apply the same amount of blur to an entire image. On the other hand, some types of image processing are local. For example, a declipping process may be applied only to clipped pixels in an image, e.g., overexposed pixels. Local image processing techniques typically determine regions of the image to be processed, and then image processing is performed on each region separately. For example, a declipping process may first determine which regions of an image include overexposed pixels, and then may apply a declipping process to each overexposed region.

Processing separate regions of an image can provide advantages, e.g., efficiency by avoiding unnecessary processing, localized effects, etc. However, in many cases it may be helpful for regions to be grouped together, and for the image processing to take into account the different groups of regions. For example, an image may include different objects with different hues, saturations, textures, etc. If the image was captured under bright lighting, several of the objects might have been overexposed, and each of these objects may have multiple patches of overexposure, e.g., several bright spots, such as reflections. Grouping together all of the overexposed regions of a particular object may provide advantages to a declipping process. For example, a declipping process may be able to process each group more coherently, that is, regions that belong to the same object can be processed so that they have the same look. In this way, for example, all of the overexposed regions of a first object in an image can be declipped by the same amount to give a more coherent appearance. Likewise, all of the overexposed regions of a second object in the image can be declipped by the same amount, and this amount may be different than the amount of declipping for the first region.

Distance is one factor that can be used to determine whether two regions should be grouped together. For example, regions that are close to each other may be more likely to belong to the same object or type of object. Described herein are various systems and methods for grouping image regions based on distances between the regions' morphological skeletons. In this way, for example, various local image processing techniques may take into account different groups of image regions to produce more coherent image processing of the image regions.

Using morphological skeletons (e.g., medial axis representations) to determine a distance between regions can, for example, provide accurate results at a reduced computational cost, particularly in cases involving complex region shapes, such as irregular shapes, concave surfaces, shapes with holes, etc. For example, as one skilled in the art will appreciate after reading the present disclosure, morphological skeletons can determine more accurate distances than methods that approximate the shape of the object by simply using rectangles or circles as bounding boxes. Likewise, it will be appreciated that morphological skeletons can determine distances at much less computational cost than, for example, brute force methods that compare every point on the perimeter of one region with each point on the perimeter of another region.

Although declipping processes are used as examples below, one skilled in the art will readily understand that other types of image processing can be implemented using the principles described herein. One skilled in the art will readily understand that other types of image processing can benefit from grouping regions as well. For example, any type of image processing that uses a trial and error method may be more efficient by using the results of one region as the starting values for another region in the same group.

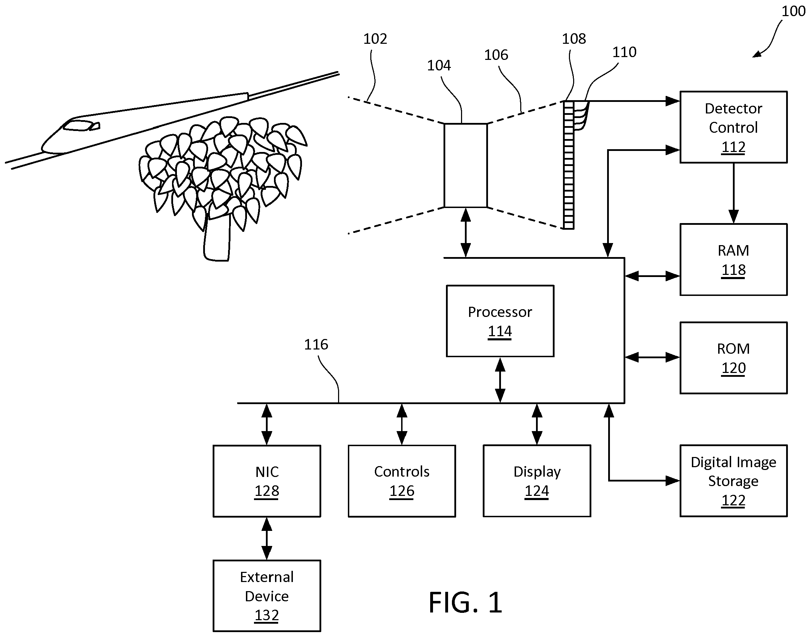

The techniques described herein may be implemented in any kind of device that can perform image processing, such as a personal computer executing image processing software, an image collection device, e.g., a camera, video camera, etc., that includes image processing functionality, a smart phone, a tablet computer, etc. For example, FIG. 1 is a block diagram of an image collection device 100 according to various embodiments. In FIG. 1, light 102 reflected from a scene can be collected and focused by optical elements 104. The focused light 106 can be projected onto a detector 108, which may be, for example, a charge coupled device or other kind of light detection system. Focused light 106 can be converted by detector 108 into an electrical signal, and can be then transferred over signal lines 110 to a detector controller 112. In detector controller 112, the individual signals from detector 108 can be converted into a digital image. The digital image may then be transferred by a processor 114 over a bus 116 to a random access memory (RAM) 118 for further processing. RAM 118 may be a dynamic RAM (DRAM), a static RAM (SRAM), a flash memory module, or other kind of computer memory.

Optical elements 104 may be connected to the bus 116 to allow optical elements 104 to be controlled by processor 114. For example, processor 114 may adjust the focus, the f-stop, or other properties of optical elements 104 through bus 116.

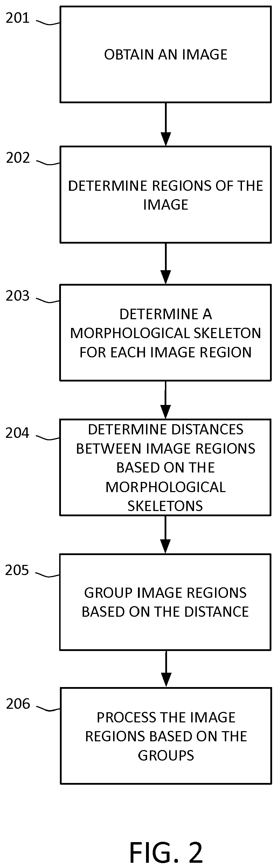

Processor 114 may be controlled by image collection and processing programs contained in a read only memory (ROM) 120 that can be accessible from bus 116. The programs do not have to be in a ROM, but may be contained in any type of long-term memory, such as a disk drive, a flash card, or an electrically erasable programmable read only memory (EEPROM), among others. Generally, the programs in ROM 120 may include image processing procedures discussed with respect to FIGS. 2-10.

The digital image may be stored before or after processing in a separate digital image storage 122, such as a digital video tape, a recordable optical disk, a hard drive, and the like. Digital image storage 122 may also be combined with the program storage. For example, a disk drive may be used both to store both programs and digital images.

The images may be displayed on a display unit 124 that can be connected to bus 116. Controls 126 can also be connected to bus 116 to control the collection and processing of the images by processor 114. Such controls 126 may include keypads, selection knobs, and separate buttons for functions such as zooming, focusing, starting the collection of images, etc.

Images may be transferred from image collection device 100 through a network interface controller (NIC) 128 that can be connected to bus 116. NIC 128 can be connected to an external local area network (LAN) 130, which may be used to transfer the images to an external device 132 located on LAN 130.

The arrangement of the functional blocks presented above is only one possible arrangement, and any number of other arrangements may be used. For example, NIC 128 may be directly coupled to an area of RAM 118 to allow direct memory access, or DMA, transfers to occur directly to and from RAM 118 of the digital collection device. This may accelerate data transfers when a large amount of data is involved, such as in a high definition digital video camera. Further, in other arrangements controls 126 and display 128 may be combined into a single unit. In yet other combinations, display 128 may be directly connected to detector controller 112 to off-load the display function from processor 114.

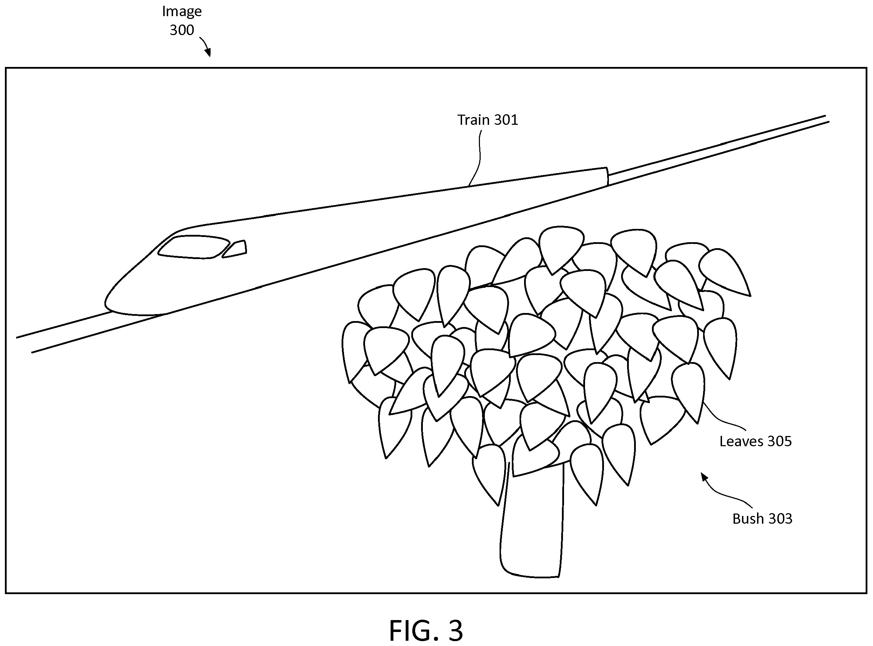

FIG. 2 is a flowchart of an example of a method according to various embodiments. FIGS. 3-8 are conceptual drawings to illustrate an example of an implementation of the method of FIG. 2 to declip image regions of an image according to various embodiments. As discussed above, grouping overexposed regions of the same object may provide advantages to declipping processes. In the example of FIGS. 3-8, overexposed regions can be grouped together if they are close to each other, and the regions in a group can be declipped in the same way to provide a more coherent look. In this example, the endpoints of morphological skeletons of the overexposed regions can be used to determine a shortest distance between two regions. During the description of the method of FIG. 2 below, FIGS. 3-8 will be referenced to illustrate how the method of FIG. 2 can be implemented according to the declipping example.

Referring to FIG. 2, an image to be processed can be obtained (201), for example, from the memory of an image processing device, such as digital image storage 122 of image collection device 100. For example, FIG. 3 is an illustration of an image 300 including a train 301 in the background and a bush 303 with leaves 305 in the foreground.

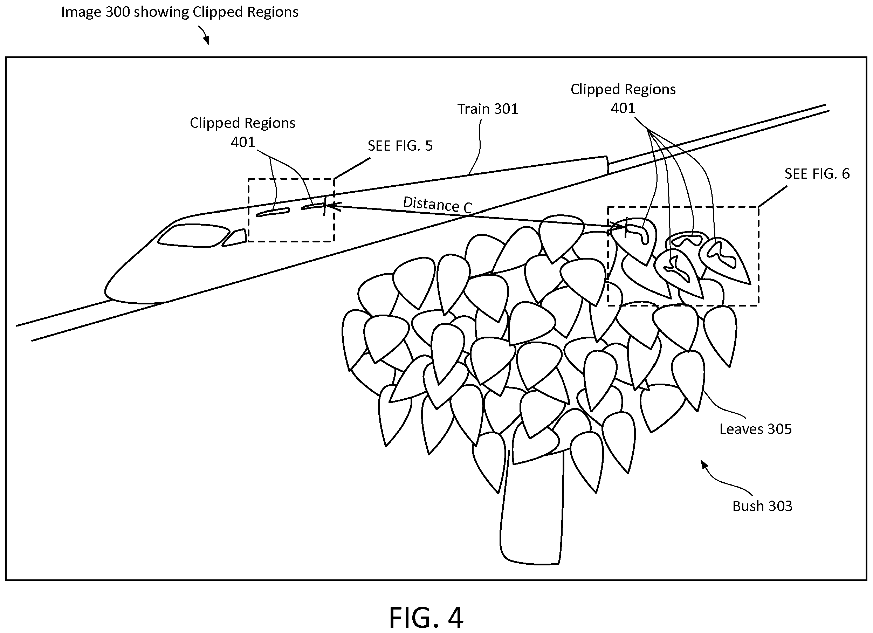

Regions of the image can be determined (202). For example, image 300 can be processed to determine regions in which the pixel values are clipped, e.g., regions that are overexposed. FIG. 4 illustrates image 300 showing clipped regions 401. For example, the angle of the sunlight may have cause reflections from some parts of train 301 and some parts of leaves 305, resulting in overexposed areas that can be determined as clipped regions 401 in this example.

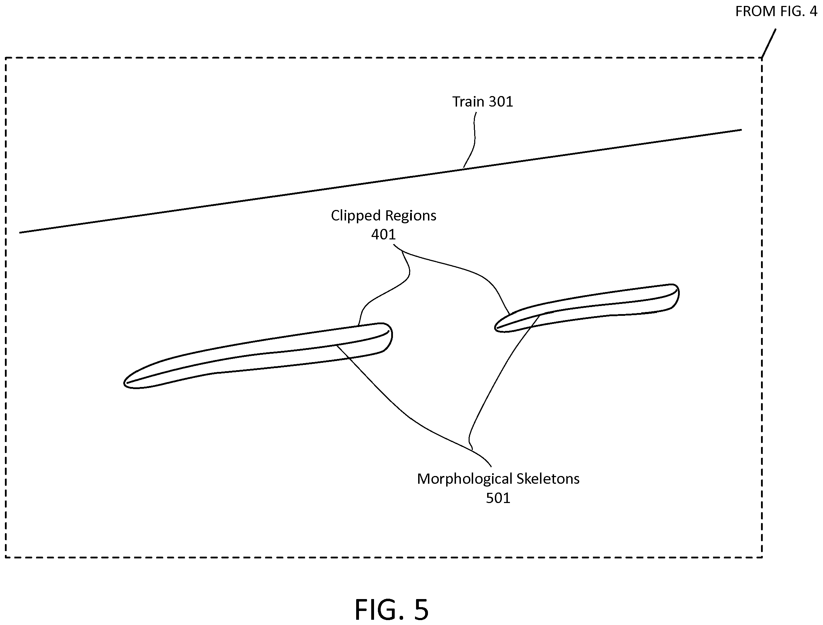

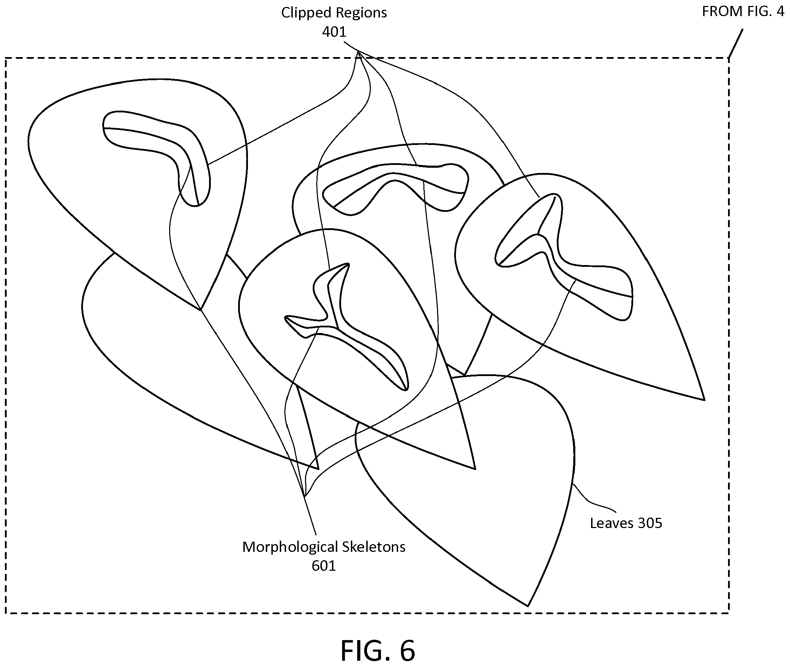

A morphological skeleton can be determined (203) for each region. For example, FIGS. 5 and 6 are close-up views of the areas in image 300 that include clipped regions 401 on train 301 (FIG. 5) and leaves 305 (FIG. 6). FIG. 5 shows morphological skeletons 501 determined for clipped regions 401 on train 301. FIG. 6 shows morphological skeletons 601 determined for clipped regions 401 on leaves 305.

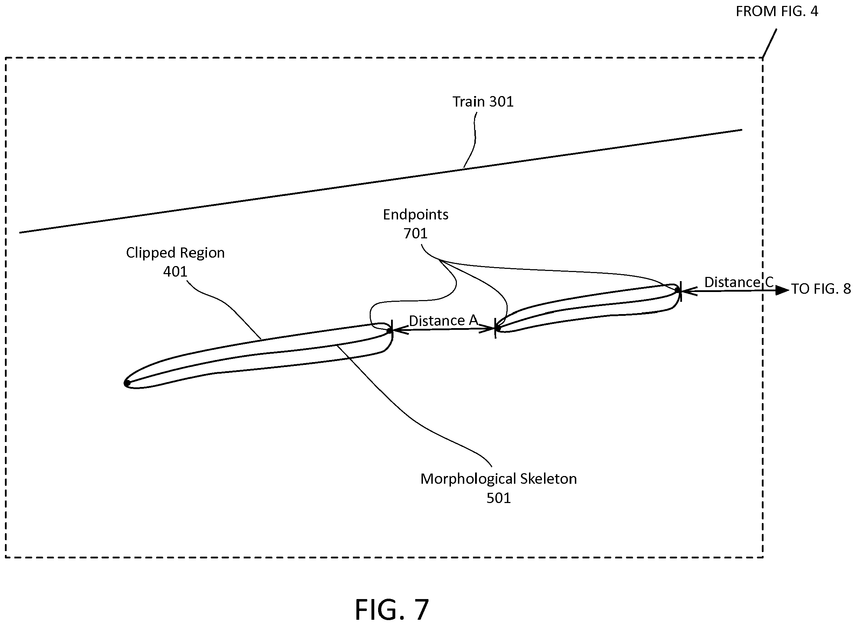

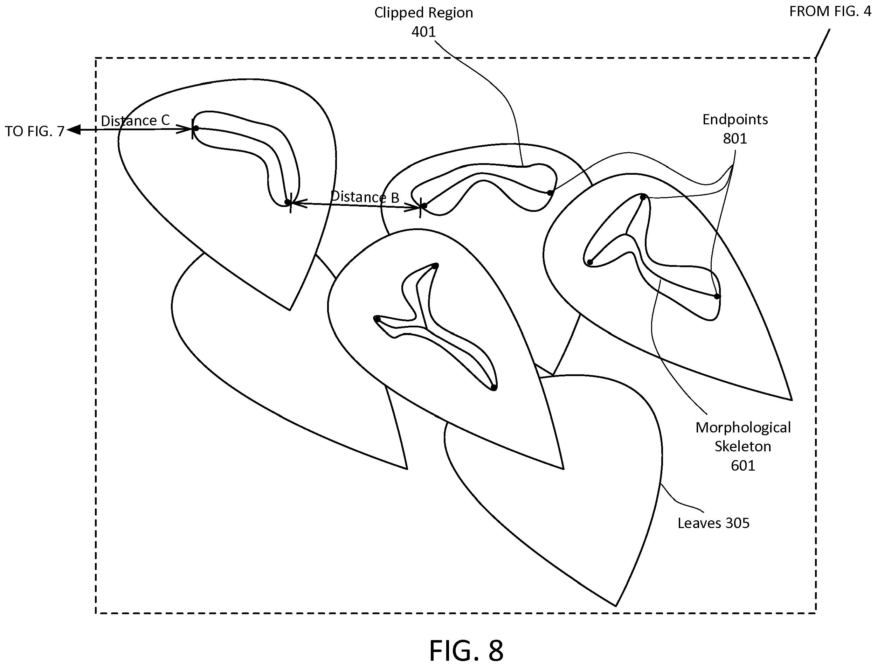

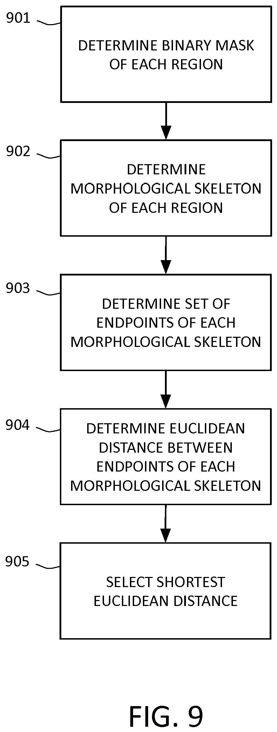

Distances between the morphological skeletons can be determined (204). For example, the endpoints of the morphological skeletons can be used to determine the distances, as described in more detail below with respect to FIG. 9. FIG. 7 illustrates endpoints 701 of morphological skeletons 501, and FIG. 8 illustrates endpoints 801 of morphological skeletons 601. In this example, the distances between each endpoint of a region's morphological skeleton and the endpoints of the other regions' morphological skeletons can be determined, and the shortest distance between each pair of regions can be selected. In other words, if the morphological skeleton of a first region has two endpoints, M and N, and the morphological skeleton of a second region has two endpoints, O and P, then four distances can be calculated: M-O, M-P, N-O, and N-P. The shortest of the four distances can be selected as the shortest distance between the first and second regions.

For the sake of clarity, only a few of the distances between endpoints are illustrated. FIG. 7 shows a Distance A, which is the shortest distance between endpoints 701 of a clipped region 401 of train 301 and endpoints 701 of another clipped region of the train. Likewise, FIG. 8 shows a Distance B, which is the shortest distance between endpoints 801 of a clipped region 401 of leaves 305 and endpoints 801 of another clipped region of the leaves. FIGS. 7 and 8 each show a part of the length of a Distance C, which is the shortest distance between a clipped region 401 of train 301 and a clipped region 401 of leaves 305. FIG. 4 shows the entire length of Distance C.

The image regions can be grouped (205) based on the distances. For example, the shortest distance between each pair of clipped regions can be compared to a distance value, such as a threshold distance, and the pair of clipped regions can be grouped together if the shortest distance between them is less than the distance value. In FIG. 7, for example, Distance A may be shorter than the distance value, and therefore, clipped regions 401 of train 301 can be grouped together. Likewise, in FIG. 8, Distance B may be shorter than the distance value, and the distances between all of the other pairs of regions (not shown) may also be shorter than the distance value. Therefore, all of the clipped regions 401 of leaves 305 can be grouped together. In contrast, Distance C may be greater than the distance value. Therefore, the corresponding clipped region 401 of train 301 and clipped region 401 of leaves 305 are not grouped together.

In various embodiments, grouping can also be based on additional factors other than distance between morphological skeletons. For example, the average color of an image region can be compared with the average color of another region to determine whether a difference in average color is within an average color difference value, such as a threshold average color difference. This factor can be used together with the shortest distance between the two regions described above. For example, the regions can be grouped together only if the difference in average color is within the average color difference value and the shortest distance is within the distance value.

The image can be processed (206) based on the groups. For example, declipping can be performed on each group separately, rather than on each region separately. In this way, for example, the declipping of the clipped regions 301 may be more focused on the underlying objects that encompass the clipped regions.

FIG. 9 is a flowchart of an example of a method for determining the shortest distance between two image regions, *Rᵢ* and *Rⱼ*, based on morphological skeletons according to various embodiments. A binary mask of each region can be determined (901), denoted as *Mᵢ* and *Mⱼ* respectively such that for each pixel *p, Mᵢ*(*p*) = 1 *if p* ∈ *Rᵢ* and *Mᵢ*(*p*) = 0 otherwise, and likewise for *Mⱼ*. Morphological skeletons *Sᵢ* and *Sⱼ* can be determined (902) for regions *Rᵢ* and *Rⱼ* respectively. A set of endpoints *Eᵢ* that belong to *Sᵢ* and have at most one neighboring point that is also in *Sᵢ* can be determined (903), and likewise for finding the endpoints *Eⱼ. Eᵢ* and *Eⱼ* likely contain only a small number of points relative to the entire skeleton or the full perimeter of their corresponding regions. As such, the endpoints can be used to efficiently estimate the distance between the two regions. The Euclidean distance between each point in *Eᵢ* and each point in *Eⱼ* can be determined (904). The shortest Euclidean distance can be selected (905) as the shortest distance between the two regions.

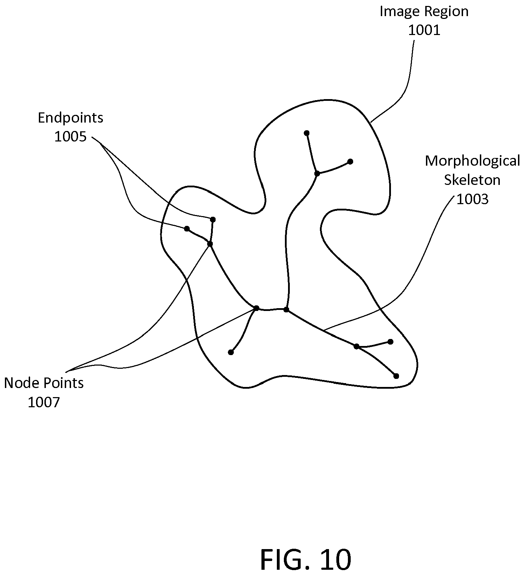

FIG. 10 illustrates another morphological skeleton according to various embodiments. In this example, an image region 1001 is obtained and a morphological skeleton 1003 is determined. In this example, not only are endpoints 1005 of the morphological skeleton determined but also node points 1007, i.e. points that have more than 2 neighboring points, are determined. Both endpoints 1005 and node points 1007 can be used to determine distance from another image region. For example, distances can be determined between the endpoints of a first region and the endpoints of a second region, between the endpoints of the first region and the node points of the second region, between the node points of the first region and the endpoints of the second region, and between the node points of the first region and the node points of the second region. Although this can result in more distance determinations than using endpoints alone, including node points can help increase the accuracy of the distance determination, particularly for irregularly-shaped regions.

One skilled in the art will understand that other points on the morphological skeletons can be used in various embodiments. For example, points could be placed on a morphological skeleton at regular intervals for use in the distance determinations. This can increase the accuracy of the distance determinations at the expense of increasing the number of determinations.

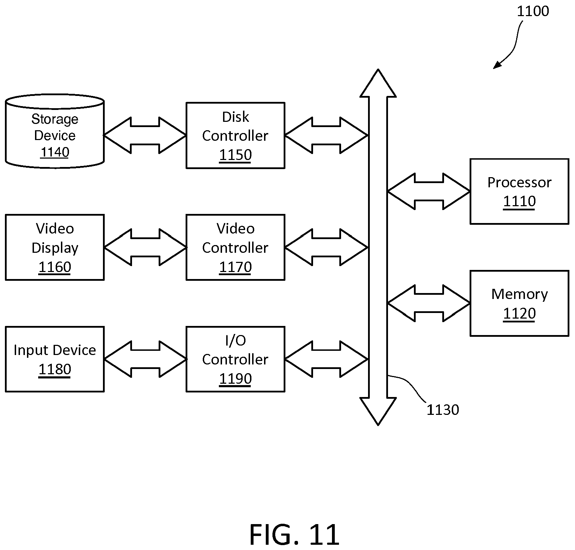

FIG. 11 illustrates another example of an apparatus according to various embodiments. FIG. 11 is a block diagram of an apparatus 1100 for implementing various techniques described above for grouping image regions. Apparatus 1100 may be implemented, for example, as a general-purpose computing platform.

Apparatus 1100 can include a processor 1110 for executing the computer-executable programs that perform various techniques described above. The programs may be stored in a memory 1120, which may also store image data. A bus 1130 can connect processor 1110 and memory 1120 to each other and to other components of apparatus 1100. In some embodiments, apparatus 1100 may include multiple processors or processors with multiple processing cores, which may execute various parts of programs in parallel.

A mass storage device 1140 can be connected to bus 1130 via a disk controller 1150. Mass storage device 1140 may contain image or video data, as well as an operating system, other programs, other data, etc. Disk controller 1150 may operate according to Serial Advanced Technology Advancement (SATA), Small Computer System Interface (SCSI), or other standards, and may provide connection to multiple mass storage devices.

A video display 1160 can be connected to bus 1130 via a video controller 1170. Video controller 1170 may provide its own memory and graphics-processing capability for use in implementing or accelerating certain aspects of the image region grouping processes, as well as for providing the functions of image and UI display.

An input device 1180 can be connected to bus 1130 via an input/output (I/O) controller 1190. I/O controller 1190 may utilize one or more of USB, IEEE 1394a, or other standards. Multiple input devices may be connected, such as keyboards, mice, and trackpads. Image and video capture devices may also be connected to the system through I/O controller 1190 or additional I/O controllers implementing other I/O standards. Networking functionality may be provided by I/O controller 1190 or a separate I/O controller.

It will be recognized by one skilled in the art that various aspects of the methods of the present disclosure may be executed in parallel on multiple systems to provide faster processing. For instance, in the case of processing a video file, frames may be divided among tens or hundreds of computing systems to provide parallel processing. Particular components, such as video display 1160, may be omitted in some systems in some operating environments. Furthermore, multiple systems may utilize shared storage accessed via an I/O bus or via a network.

It will be further recognized by one skilled in the art that apparatus 1100 may be implemented within an image capture device such as a digital still camera or digital video camera. Various techniques disclosed herein may be implemented by apparatus 1100 at the time of image capture to group image regions.

It should also be appreciated that although various examples of various embodiments have been shown and described in detail herein, those skilled in the art can readily devise other varied embodiments that still remain within the scope of this disclosure.

All examples and conditional language recited herein are intended for instructional purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry, electrical components, optical components, etc., embodying the principles of the disclosure. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor ("DSP") hardware, read only memory ("ROM") for storing software, random access memory ("RAM"), and nonvolatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

It is noted that the use of "and/or" and "at least one of", for example, in the cases of "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended for as many items as listed.

In the claims hereof, any element expressed as a means for performing a specified function is intended to encompass any way of performing that function including, for example, a combination of circuit elements that performs that function, software in any form, including, therefore, firmware, microcode or the like, combined with appropriate circuitry for executing that software to perform the function, etc. The disclosure as defined by such claims resides in the fact that the functionalities provided by the various recited means are combined and brought together in the manner which the claims call for. It is thus regarded that any means that can provide those functionalities are equivalent to those shown herein.

## Claims

1. A system (100, 1100) comprising:
a processor (114, 1110); and
a memory (118, 1120) storing instructions configured to cause the processor to:
obtain (201) an image;
determine (202) a plurality of image regions of the image;
determine (203) a morphological skeleton for each of the image regions;
determine (204) distances between image regions based on the morphological skeletons and **characterised by** causing the processor to:
determine (205) a plurality of groups of two or more of the image regions based on the distances; and
process (206) the image based on the groups.

2. The system of claim 1, wherein processing the image based on the groups includes declipping the image regions.

3. The system of claim 1, wherein determining the distances between the image regions includes determining endpoints of the morphological skeletons and determining distances between the endpoints.

4. The system of claim 3, wherein determining the distances between the image regions further includes determining node points of the morphological skeletons.

5. The system of claim 1, wherein determining the plurality of groups includes determining a shortest distance between image regions.

6. A method comprising:
obtaining (201) an image;
determining (202) a plurality of image regions of the image;
determining (203) a morphological skeleton for each of the image regions;
determining (204) distances between image regions based on the morphological skeletons and **characterised by**:
determining (205) a plurality of groups of two or more of the image regions based on the distances; and
processing (206) the image based on the groups.

7. The method of claim 6, wherein processing the image based on the groups includes declipping the image regions.

8. The method of claim 6, wherein determining the distances between the image regions includes determining endpoints of the morphological skeletons and determining distances between the endpoints.

9. The method of claim 8, wherein determining the distances between the image regions further includes determining node points of the morphological skeletons.

10. The method of claim 6, wherein determining the plurality of groups includes determining a shortest distance between image regions.

11. A non-transitory computer-readable medium (120, 1140) storing computer-executable instructions executable to perform a method comprising:
obtaining (201) an image;
determining (202) a plurality of image regions of the image;
determining (203) a morphological skeleton for each of the image regions;
determining (204) distances between image regions based on the morphological skeletons and **characterised by**:
determining (205) a plurality of groups of two or more of the image regions based on the distances; and
processing (206) the image based on the groups.

12. The computer-readable medium of claim 11, wherein processing the image based on the groups includes declipping the image regions.

13. The computer-readable medium of claim 11, wherein determining the distances between the image regions includes determining endpoints of the morphological skeletons and determining distances between the endpoints.

14. The computer-readable medium of claim 13, wherein determining the distances between the image regions further includes determining node points of the morphological skeletons.

15. The computer-readable medium of claim 11, wherein determining the plurality of groups includes determining a shortest distance between image regions.

## Patentansprüche

1. System (100, 1100), umfassend:
einen Prozessor (114, 1110); und
einen Speicher (118, 1120), der Anweisungen speichert, die dazu konfiguriert sind, den Prozessor zu veranlassen zum:
Erlangen (201) eines Bilds;
Bestimmen (202) einer Vielzahl von Bildbereichen des Bilds;
Bestimmen (203) eines morphologischen Skeletts für jeden Bildbereich;
Bestimmen (204) von Abständen zwischen Bildbereichen auf Grundlage der morphologischen Skelette, und **dadurch gekennzeichnet, dass** der Prozessor veranlasst wird zum:
Bestimmen (205) einer Vielzahl von Gruppen von zwei oder mehr Bildbereichen auf Grundlage der Abstände; und
Verarbeiten (206) des Bilds auf Grundlage der Gruppen.

2. System nach Anspruch 1, wobei das Verarbeiten des Bilds auf Grundlage der Gruppen das Aufheben von Zuschneidungen der Bildbereiche beinhaltet.

3. System nach Anspruch 1, wobei das Bestimmen der Abstände zwischen den Bildbereichen das Bestimmen von Endpunkten der morphologischen Skelette und das Bestimmen von Abständen zwischen den Endpunkten beinhaltet.

4. System nach Anspruch 3, wobei das Bestimmen der Abstände zwischen den Bildbereichen das Bestimmen von Knotenpunkten der morphologischen Skelette beinhaltet.

5. System nach Anspruch 1, wobei das Bestimmen der Vielzahl von Gruppen das Bestimmen eines kürzesten Abstands zwischen Bildregionen beinhaltet.

6. Verfahren, umfassend:
Erlangen (201) eines Bilds;
Bestimmen (202) einer Vielzahl von Bildbereichen des Bilds;
Bestimmen (203) eines morphologischen Skeletts für jeden Bildbereich;
Bestimmen (204) von Abständen zwischen Bildbereichen auf Grundlage der morphologischen Skelette, und **gekennzeichnet durch**:
Bestimmen (205) einer Vielzahl von Gruppen von zwei oder mehr Bildbereichen auf Grundlage der Abstände; und
Verarbeiten (206) des Bilds auf Grundlage der Gruppen.

7. Verfahren nach Anspruch 6, wobei das Verarbeiten des Bilds auf Grundlage der Gruppen das Aufheben von Zuschneidungen der Bildbereiche beinhaltet.

8. Verfahren nach Anspruch 6, wobei das Bestimmen der Abstände zwischen den Bildbereichen das Bestimmen von Endpunkten der morphologischen Skelette und das Bestimmen von Abständen zwischen den Endpunkten beinhaltet.

9. Verfahren nach Anspruch 8, wobei das Bestimmen der Abstände zwischen den Bildbereichen das Bestimmen von Knotenpunkten der morphologischen Skelette beinhaltet.

10. Verfahren nach Anspruch 6, wobei das Bestimmen der Vielzahl von Gruppen das Bestimmen eines kürzesten Abstands zwischen Bildregionen beinhaltet.

11. Nicht transitorisches computerlesbares Medium (120, 1140), auf dem von einem Computer ausführbare Anweisungen gespeichert sind, um ein Verfahren auszuführen, umfassend:
Erlangen (201) eines Bilds;
Bestimmen (202) einer Vielzahl von Bildbereichen des Bilds;
Bestimmen (203) eines morphologischen Skeletts für jeden Bildbereich;
Bestimmen (204) von Abständen zwischen Bildbereichen auf Grundlage der morphologischen Skelette, und **gekennzeichnet durch**:
Bestimmen (205) einer Vielzahl von Gruppen von zwei oder mehr Bildbereichen auf Grundlage der Abstände; und
Verarbeiten (206) des Bilds auf Grundlage der Gruppen.

12. Computerlesbares Medium nach Anspruch 11, wobei das Verarbeiten des Bilds auf Grundlage der Gruppen das Aufheben von Zuschneidungen der Bildbereiche beinhaltet.

13. Computerlesbares Medium nach Anspruch 11, wobei das Bestimmen der Abstände zwischen den Bildbereichen das Bestimmen von Endpunkten der morphologischen Skelette und das Bestimmen von Abständen zwischen den Endpunkten beinhaltet.

14. Computerlesbares Medium nach Anspruch 13, wobei das Bestimmen der Abstände zwischen den Bildbereichen das Bestimmen von Knotenpunkten der morphologischen Skelette beinhaltet.

15. Computerlesbares Medium nach Anspruch 11, wobei das Bestimmen der Vielzahl von Gruppen das Bestimmen eines kürzesten Abstands zwischen Bildregionen beinhaltet.

## Revendications

1. Système (100, 1100) comprenant :
un processeur (114, 1110) ; et
une mémoire (118, 1120) stockant des instructions configurée pour indiquer au processeur :
d'obtenir (201) une image ;
de déterminer (202) une pluralité de régions d'image de l'image ;
de déterminer (203) un squelette morphologique pour chacune des régions d'image :
de déterminer (204) des distances entre des régions d'image en fonction des squelettes morphologiques et **caractérisé par** un processeur permettant :
de déterminer (205) une pluralité de groupes de deux des régions d'image ou plus en fonction des distances ; et
de traiter (206) l'image en fonction des groupes.

2. Système selon la revendication 1, dans lequel le traitement de l'image en fonction des groupes inclut la désaturation des régions d'image.

3. Système selon la revendication 1, dans lequel la détermination des distances entre les régions d'image inclut la détermination de points d'extrémité des squelettes morphologiques et la détermination de distances entre les points d'extrémité.

4. Système selon la revendication 3, dans lequel la détermination des distances entre les régions d'image inclut en outre la détermination de points nodaux des squelettes morphologiques.

5. Système selon la revendication 1, dans lequel la détermination de la pluralité de groupes inclut la détermination d'une distance la plus courte entre des régions d'image.

6. Procédé comprenant :
l'obtention (201) d'une image ;
la détermination (202) d'une pluralité de régions d'image de l'image ;
la détermination (203) d'un squelette morphologique pour chacune des régions d'image ;
la détermination (204) de distances entre des régions d'image en fonction des squelettes morphologiques et **caractérisé par** :
la détermination (205) d'une pluralité de groupes de deux des régions d'image ou plus en fonction des distances ; et
le traitement (206) de l'image en fonction des groupes.

7. Procédé selon la revendication 6, dans lequel le traitement de l'image en fonction des groupes inclut la désaturation des régions d'image.

8. Procédé selon la revendication 6, dans lequel la détermination des distances entre les régions d'image inclut la détermination de points d'extrémité des squelettes morphologiques et la détermination de distances entre les points d'extrémité.

9. Procédé selon la revendication 8, dans lequel la détermination des distances entre les régions d'image inclut en outre la détermination de points nodaux des squelettes morphologiques.

10. Procédé selon la revendication 6, dans lequel la détermination de la pluralité de groupes inclut la détermination d'une distance la plus courte entre des régions d'image.

11. Support non transitoire lisible sur ordinateur (120, 1140) stockant des instructions exécutables par un ordinateur pour mettre en oeuvre un procédé comprenant :
l'obtention (201) d'une image ;
la détermination (202) d'une pluralité de régions d'image de l'image ;
la détermination (203) d'un squelette morphologique pour chacune des régions d'image ;
la détermination (204) de distances entre des régions d'image en fonction des squelettes morphologiques et **caractérisé par** :
la détermination (205) d'une pluralité de groupes de deux des régions d'image ou plus en fonction des distances ; et
le traitement (206) de l'image en fonction des groupes.

12. Support lisible sur ordinateur selon la revendication 11, dans lequel le traitement de l'image en fonction des groupes inclut la désaturation des régions d'image.

13. Support lisible sur ordinateur selon la revendication 11, dans lequel la détermination des distances entre les régions d'image inclut la détermination de points d'extrémité des squelettes morphologiques et la détermination de distances entre les points d'extrémité.

14. Support lisible sur ordinateur selon la revendication 13, dans lequel la détermination des distances entre les régions d'image inclut en outre la détermination de points nodaux des squelettes morphologiques.

15. Support lisible sur ordinateur selon la revendication 11, dans lequel la détermination de la pluralité de groupes inclut la détermination d'une distance la plus courte entre des régions d'image.
